# EUROPÄISCHE PATENTANMELDUNG

(11) **EP 0 523 268 A1**
(43) Veröffentlichungstag der Anmeldung: **20.01.1993**
(21) Anmeldenummer: 91111991.5
(22) Anmeldetag: 18.07.1991
(51) Int. Cl.: A23F 5/22, B01D 15/00

(54) **Verfahren und Vorrichtung zum Entcoffeinieren von flüssigen, insbesondere wässrigen Rohkaffee-Extrakten**

(71) Anmelder: Jacobs Suchard AG, CH-8034 Zürich (CH)
(72) Erfinder: Bunselmeyer, Dieter, W-2808 Syke (DE); Culmsee, Ortwin, Dr., W-2875 Ganderkesee (DE); Heilmann, Wolfgang, Dr., W-2800 Bremen 33 (DE)
(74) Vertreter: Bolte, Erich, Dipl.-Ing.

(57) **Zusammenfassung**

Die Erfindung betrifft ein Verfahren und eine Vorrichtung zum Entcoffeinieren von flüssigen, insbesondere wässrigen Rohkaffee-Extrakten.

Als für Coffein selektives Adsorptionsmittel wird ein Molekularsieb, insbesondere Zeolith, verwendet. Dieses Adsorptionsmittel ist vorzugsweise als Festbett in einer Kolonne angeordnet, durch das der Rohkaffee-Extrakt zur Entcoffeinierung und anschließend wenigstens eine Wiederaufbereitungssubstanz zum Regenerieren des Adsorptionsmittels zur Wiederverwendung hindurchleitbar sind.

Es wird vorzugsweise eine Mehrzahl derartiger Kolonnen zu einer Ringschaltung zusammengeschlossen, so daß zyklisch nacheinander diese Kolonnen in den Adsorptionsprozeß oder den Wiederaufbereitungsprozeß geschaltet werden können. Die Kolonnen können dabei ortsunverändert bleiben. Das adsorbierte Coffein wird desorbiert und als weiterverwendbares Nebenprodukt gewonnen.

## Beschreibung

Die Erfindung betrifft ein Verfahren zum Entcoffeinieren von flüssigen, insbesondere wässrigen Rohkaffee-Extrakten, bei dem das Coffein aus dem Extrakt von einem Adsorptionsmittel adsorbiert wird. Weiter betrifft die Erfindung eine Vorrichtung zum Entcoffeinieren von flüssigen, insbesondere wässrigen Rohkaffee-Extrakten.

Es sind bereits unterschiedliche Entcoffeinierungsverfahren gebräuchlich. Beispielsweise kann eine Entcoffeinierung mit Aktivkohle als Adsorptionsmittel für das Coffein durchgeführt werden. Die Aktivkohle muß hierfür in spezieller Weise vorbehandelt werden, um die gewünschten Adsorptionseigenschaften zu erhalten. Zur Entcoffeinierung wird bei einem derartigen Entcoffeinierungsverfahren üblicherweise ein wässriger Rohkaffee-Extrakt hergestellt und dieser zur Entcoffeinierung mit der vorbehandelten Aktivkohle in Kontakt gebracht.

Ein derartiges Entcoffeinierungsverfahren ist insbesondere durch die Vorbehandlung des Absorptionsmittels jedoch relativ aufwendig und kostenintensiv.

Der Erfindung liegt daher die Aufgabe zugrunde, ein Verfahren zur Entcoffeinierung von Rohkaffee-Extrakten bereitzustellen, welches einfacher und kostengünstiger durchführbar ist. Diese Aufgabe wird erfindungsgemäß, unabhängig voneinander, durch die Merkmale der Ansprüche 1 und 19 gelöst.

Eine erfindungsgemäße Vorrichtung zum Entcoffeinieren von flüssigen Kaffee-Extrakten, vorzugsweise zur Durchführung der erfindungsgemäßen Verfahren, zeichnet sich durch die Merkmale des Anspruch 19 aus.

Für das erfindungsgemäße Verfahren zum Entcoffeinieren von Rohkaffee-Extrakten wird ein für Coffein selektiver Molekularsieb verwendet, mit welchem ein zu entcoffeinierender Extrakt des Kaffees für einen Adsorptionsprozeß in Kontakt gebracht wird, wobei sich das erfindungsgemäße Verfahren weiter in vorteilhafter Weise dadurch auszeichnet, daß das Adsorptionsmittel regeneriert wird, insbesondere von dem absorbierten Coffein befreit wird, so daß das Adsorptionsmittel für einen nachfolgenden Adsorptionsprozeß wiederverwendbar ist.

Als Adsorptionsmittel eignen sich Molekularsiebe, insbesondere Zeolithe und darunter Y-Zeolithe für das erfindungsgemäße Verfahren. Vorteilhaft ist es, einen wässrigen Rohkaffee-Extrakt mit einem Coffeingehalt von ca. 5 g/l einzusetzen.

Das erfindungsgemäße Entcoffeinierungsverfahren ist besonders kostengünstig durchführbar, da praktisch kein Adsorptionsmittel verbraucht wird. Das erfindungsgemäß verwendete Adsorptionsmittel wird vielmehr nach der Entcoffeinierung wieder aufbereitet, so daß es nahezu beliebig lange wiederverwendet werden kann.

Für die Wiederaufbereitung wird das Adsorptionsmittel von dem adsorbierten Coffein befreit. Dieses desorbierte Coffein kann als Nebenprodukt des erfindungsgemäßen Entcoffeinierungsverfahrens isoliert und beispielsweise für pharmazeutische Produkte verwendet werden. Auch dies trägt zur Kostensenkung des erfindungsgemäßen Encoffeinierungsverfahrens in vorteilhafter Weise bei.

Das Regenerieren des Adsorptionsmittels kann bei dem erfindungsgemäßen Verfahren, bevorzugten Ausführungsformen folgend, kostengünstig durchgeführt werden, da die Desorptionsmittel einfach und günstig erhältlich sind und der apparative Aufwand gering ist.

Vorzugsweise wird das mit Coffein beladene Adsorptionsmittel zunächst mit einem Elutionsmittel, z.B. mit Wasser gespült, um Extrakt-Inhaltsstoffe - außer Coffein - bzw. Kaffeerückstände zu eluieren. Das dabei anfallende Eluat, welches Extrakt-Inhaltsstoffe enthält, wird ebenfalls kostensenkend als Quellmittel für die Vorquellung bzw. Extraktion von Rohkaffee-Bohnen verwendet werden, so daß mit diesem Eluat der zu entcoffeinierende wäßrige Extrakt kostengünstig herstellbar ist.

Nach dem Eluieren der Nicht-Coffein-Inhaltsstoffe vom Molekularsieb wird das Coffein vom Molekularsieb desorbiert. Hierzu wird vorteilhafterweise ein Desorptionsmittel verwendet, das zu 80 % aus Alkohol und zu 20 % aus Wasser besteht. Beim Durchleiten des Desorptionsmittels durch das beladene Adsorptionsmittel erhält man eine Lösung von Coffein im Desorptionsmittel. Durch Destillation lassen sich Coffein und Desorptionsmittel weitgehend voneinander trennen, so daß das Desorptionsmittel für weitere Desorptionsprozesse wiederverwendbar ist, und Coffein bzw. wäßrige Coffeinlösung zurückbleibt.

Nach einem weiteren Merkmal der Erfindung schließt sich an die Desorption von Coffein ein Reinigungsschritt an, wobei Rückstände von Desorptionsmittel aus dem Adsorptionsmittel mittels eines Reinigungsmittels vorzugsweise Wasser oder Wasserdampf verdrängt werden. Da vorzugsweise auch das Desorptionsmittel Wasser enthält, können zur Rückgewinnung des Desorptionsmittels und der Abscheidung einer wässrigen Coffeinlösung vorzugsweise das Desorptionsmittel und das Reinigungsmittel in einem gemeinsamen Destillationsprozeß abdestilliert und vom Coffein getrennt werden.

Die wesentlichen Prozesse des erfindungsgemäßen Verfahrens werden vorzugsweise in einem Temperaturbereich zwischen 50 °C und 100 °C, beispielsweise bei etwa 75 °C durchgeführt. Bei der Verwendung eines solchen Adsorptionsmittels ist mit Vorteil eine Vorbehandlung des Adsorptionsmittels, insbesondere auch im Hinblick auf die selektive Adsorptionsfähigkeit für Coffein, nicht erforderlich. Auch insoweit kann somit das erfindungsgemäße Entcoffeinierungsverfahren einfacher und kostengünstiger ausgeführt werden. Zudem kann ein Molekularsieb durch Wiederaufbereitung besonders lange wiederverwendet werden. Auch eine Desorption des adsorbierten Coffeins ist in einfacher Weise und mit kostengünstigen Desorptionmitteln möglich.

Das bzw. die erfindungsgemäße(n) Entcoffeinierungsverfahren sind somit besonders wirtschaftlich. Des weiteren ist in besonders einfacher Weise eine Automatisierung sowie ein kontinuierlicher Ablauf des erfindungsgemäßen Verfahrens möglich.

Ein bevorzugtes Ausführungsbeispiel des erfindungsgemäßen Entcoffeinierungsverfahrens, für das ebenfalls selbständiger Schutz beansprucht wird, sieht vor, daß die Verfahrensschritte des Verfahrens in vorrichtungsmäßig separaten, vorzugsweise gleich ausgebildeten Stufen durchgeführt werden. Mit besonderem Vorteil können einzelne Stufen oder auch Gruppen von jeweils ein oder mehreren Stufen mit Adsorptionsmittel zeitlich nebeneinander für unterschiedliche Verfahrensstadien verwendet werden, wobei aber jede einzelne Stufe zeitlich aufeinanderfolgend unterschiedliche Verfahrensstadien durchläuft. Dabei werden vorzugsweise die einzelnen Stufen oder Gruppen von Stufen zyklisch fortlaufend in ein jeweiliges gleiches Verfahrensstadium gebracht.

Dies bedeutet, daß in vorteilhafter Weise mit einigen der Stufen ein Adsorptionsprozeß durchgeführt werden kann, während gleichzeitig das Adsorptionsmittel der übrigen Stufen wiederaufbereitet wird. Dabei können sich die Stufen im Wiederaufbereitungsstadium gleichzeitig in unterschiedlichen Stadien befinden, beispielsweise jeweils einige in der Elutionsphase, der Desorptionsphase oder der Reinigungsphase. Jede dieser Stufen durchläuft zeitlich hintereinander alle vorhandenen Stadien.

Werden mehrere Stufen für dasselbe Verfahrensstadium verwendet, beispielsweise eine Gruppe von Stufen für den Adsorptionsprozeß, so werden vorzugsweise nicht alle diese Stufen gleichzeitig in ein nächstes Verfahrensstadium gebracht, sondern nacheinander. Beispielsweise werden bevorzugt zehn Stufen von sechzehn Stufen gleichzeitig für die Adsorption verwendet. Bei fortschreitendem Adsorptionsprozeß wird dann aber jeweils nur eine der zehn Adsorptionsstufen aus dem Adsorptionsprozeß herausgenommen und in das Wiederaufbereitungsstadium gebracht. Diese herausgenommene Stufe wird dann, vorzugsweise zyklisch, durch eine frisch wiederaufbereitete Stufe ersetzt.

Der zu entcoffeinierende Kaffee-Extrakt wird dabei vorzugsweise nacheinander durch alle Adsorptionsstufen geleitet, wobei er vorzugsweise zunächst die Adsorptionsstufe durchläuft, die sich von den beteiligten Stufen am längsten im Adsorptionsprozeß befindet und daher am wenigsten noch aufnahmefähig für Coffein ist, so daß der letzte Rest von Coffein in dem zu entcoffeinierenden Kaffee-Extrakt besonders effizient von der aufnahmefähigsten, frisch wiederaufbereiteten Adsorptionsstufe entzogen, das heißt adsorbiert wird. Damit ist eine besonders effiziente und vollständige Entcoffeinierung des Kaffees möglich.

Eine erfindungsgemäße Vorrichtung zum Entcoffeinieren von flüssigen, insbesondere wässrigen Rohkaffee-Extrakten umfaßt wenigstens eine Kammer (Vorrichtungsstufe), in der ein Festbett aus Adsorptionsmittel, vorzugsweise Molekularsieb, angeordnet ist, durch das flüssige oder gasförmig Substanzen hindurchleitbar sind, und die Zuleitungs- und Ableitungsanschlüsse aufweist zum Einleiten und Ableiten von Rohkaffee-Extrakt und von mindestens einem weiteren Mittel zum Regenerieren des Adsorptionsmittels.

Als Kammer wird vorzugsweise eine Kolonne verwendet. Bevorzugt befindet sich in einer solchen Kolonne ein Festbett aus Molekularsieb (beispielsweise 2 kg), durch welches das jeweils verwendete flüssige oder gasförmige Mittel hindurchgeleitet wird bzw. hindurchleitbar ist. Die Zuleitung und Ableitung der unterschiedlichen zu verwendenden Mittel ist besonders gezielt möglich, indem für diese Mittel jeweils eigene Anschlüsse und Leitungen vorgesehen sind, wobei vorzugsweise mehrere Kammern in diesem Leitungssystem parallel zueinander geschaltet vorgesehen sind. Bevorzugt werden Ringleitungen mit Vorlauf und Rücklauf verwendet.

Die erfindungsgemäße Vorrichtung hat damit insbesondere den Vorteil, daß die Kammern selbst für die Durchführung einzelner Prozesse des Entcoffeinierungsverfahrens nicht bewegt werden müssen. Die Kammern und das darin befindliche Adsorptionsmittel bleiben mit Vorteil ortsunverändert. Lediglich unterschiedliche Mittel werden gezielt in die Kammer eingeleitet.

Vorzugsweise wird eine Gruppe von Kammern für die Durchführung des Adsorptionsprozesses oder auch anderer Prozesse hintereinandergeschaltet. Das für diesen Prozeß benötigte Mittel wird dann nacheinander durch die Kammern dieser Gruppe von Kammern (von Kammer zu Kammer) geleitet.

Weitere erfindungsgemäße und vorteilhafte Ausgestaltungen der erfindungsgemäßen Verfahren und der erfindungsgemäßen Vorrichtung ergeben sich aus den Unteransprüchen.

Ausführungsbeispiele, aus denen sich weitere erfinderische Merkmale ergeben, sind in der Zeichnung dargestellt. Es zeigen:
- Fig. 1: ein Blockschaltbild zur Veranschaulichung des prinzipiellen Aufbaus einer erfindungsgemäßen Entcoffeinierungsvorrichtung und der Durchführung des erfindungsgemäßen Entcoffeinierungsverfahrens,
- Fig. 2: mehrere als Kolonnen ausgebildete Vorrichtungsstufen einer erfindungsgemäßen Vorrichtung in schematischer Seitenansicht,
- Fig. 3: die Kolonnen gemäß Fig. 2 in einer perspektivischen Ansicht,
- Fig. 4: eine Schaltung eines ersten Ausführungsbeispiels einer erfindungsgemäßen Entcoffeinierungsvorrichtung,
- Fig. 5: die Schaltung eines zweiten Ausführungsbeispiels einer erfindungsgemäßen Vorrichtung,
- Fig. 6: die Schaltung eines dritten Ausführungsbeispiels einer erfindungsgemäßen Vorrichtung und
- Fig. 7: ein Beispiel für eine prinzipielle Anordnung der Vorrichtungsstufen einer erfindungsgemäßen Entcoffeinierungsvorrichtung in der Draufsicht.

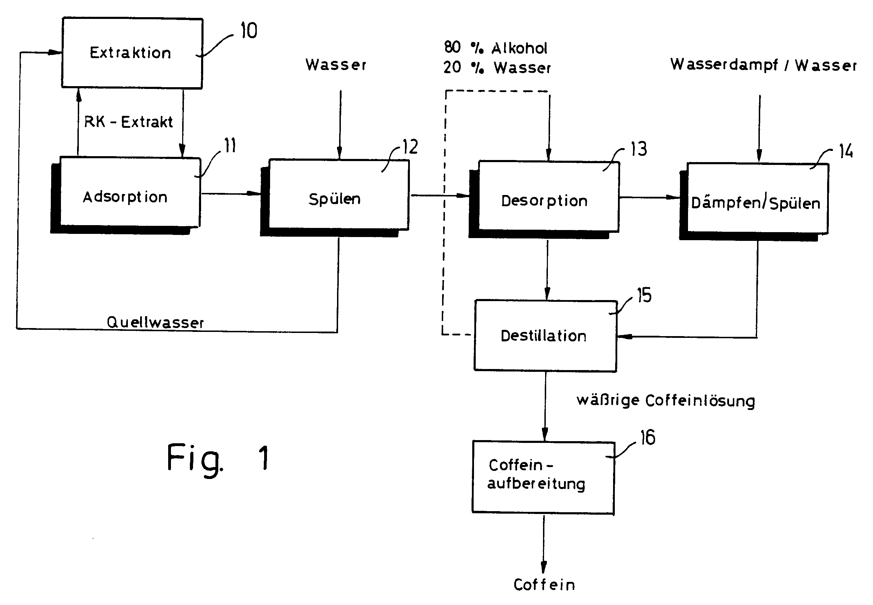

Fig. 1 zeigt ein Blockschaltbild für den prinzipiellen Aufbau eines Ausführungsbeispieles einer erfindungsgemäßen Entcoffeinierungsvorrichtung und für die Durchführung eines Beispiels eines erfindungsgemäßen Entcoffeinierungsverfahrens.

Das Feld 10 im Blockschaltbild steht für eine Herstellung eines zu entcoffeinierenden flüssigen, insbesondere wässrigen Rohkaffee-Extraktes, also eine Extraktion.

Der so hergestellte Rohkaffee-Extrakt wird einem Adsorptionsprozeß gemäß Feld 11 zugeführt, bei dem dem Rohkaffee-Extrakt mit einem Adsorptionsmittel das Coffein entzogen wird. Als Adsorptionsmittel wird vorzugsweise ein Molekularsieb, nämlich ein Zeolith, vorzugsweise Y-Zeolith, verwendet, welches für eine selektive Adsorption von Coffein geeignet ist.

Der Rohkaffee-Extrakt kann den Adsorptionsprozeß für die Entcoffeinierung auch mehrfach durchlaufen. Der entcoffeinierte Rohkaffee-Extrakt wird, wie in der Fig. 1 nicht näher dargestellt, nach der Adsorption abgeleitet und weiterverarbeitet.

Das bei der Adsorption 11 verwendete Adsorptionsmittel wird nach dem Adsorptionsprozeß zur Wiederverwendung für einen nächsten Adsorptionsprozeß 11 wiederaufbereitet. Hierzu werden zeitliche Nachfolgeprozesse durchgeführt, nämlich ein Elutionsprozeß 12, ein Desorptionsprozeß 13 und ein Reinigungsprozeß 14.

Für den Elutionsvorgang, mit dem Rohkaffee-Extraktreste bzw. -rückstände aus dem Adsorptionsmittel entfernt werden sollen, wird vorzugsweise Wasser verwendet. Dieses Wasser wird, gegebenenfalls mehrfach, durch das Adsorptionsmittel geleitet. Das nach der Elution 12 Kaffee-Extraktrückstände enthaltende Wasser kann als Quellwasser für die Quellung von Rohkaffee-Bohnen im Rahmen des Extraktionsprozesses 10 verwendet werden.

Bei der der Elution 12 nachfolgenden Desorption 13 wird durch das mit Coffein beladene Adsorptionsmittel ein Desorptionsmittel geleitet. Dieses besteht vorzugsweise zu 80 % aus Alkohol und zu 20 % aus Wasser. Auch bei diesem Desorptionsprozeß 13 kann das Desorptionsmittel mehrfach durch das Adsorptionsmittel geleitet werden.

Mit dem Desorptionsmittel wird aus dem Adsorptionsmittel das Coffein desorbiert, das Adsorptionsmittel also von dem Coffein befreit. Aus dem Desorptionsprozeß 13 abgeführt wird ein Coffein enthaltendes Desorptionsmittel. Eine Trennung von Desorptionsmittel und Coffein bzw. wässriger Coffeinlösung geschieht mittels eines Destillationsprozesses 15. Das über die Destillation vom Coffein getrennte Desorptionsmittel kann nach dieser Rückgewinnung für einen nächsten Desorptionsprozeß wiederverwendet werden. Die wässrige Coffeinlösung wird nach dem Destillationsprozeß 15 abgeleitet und zur Gewinnung von Coffein als Nebenprodukt des Entcoffeinierungsverfahrens einem Coffeinaufbereitungsprozeß 16 zugeführt.

Nach dem Desorptionsprozeß 13 wird ein Reinigungsprozeß 14 durchgeführt, um das Adsorptionsmittel von Rückständen des Desorptionsmittels zu befreien. Als Reinigungsmittel wird hierbei vorzugsweise Wasserdampf bzw. Wasser verwendet. Mit Hilfe dieses Wasserdampfes wird das Desorptionsmittel aus dem Adsorptionsmittel verdrängt. Ein Desorptionsmittel/Reinigungsmittel-Gemisch wird nach dem Reinigungsprozeß 14 abgeleitet und ebenfalls dem Destillationsprozeß 15 zugeleitet. Da als Reinigungsmittel Wasserdampf bzw. Wasser verwendet wird, wird die Zusammensetzung der dem Destillationsprozeß 15 zugeführten Flüssigkeit aus Alkohol und Wasser qualitativ nicht verändert. Die quantitative Zusammensetzung des rückgewonnenen Desorptionsmittels kann über die Parameter der Destillation 15 gesteuert werden.

Die Abfolge der Prozesse 11..14 im Blockschaltbild gemäß Fig. 1 ist zeitlich zu verstehen. Gleichzeitig stehen die Felder 11..14 im Blockschaltbild aber auch für eine Anordnung von Kammern, welche Adsorptionsmittel enthalten. Jede der verwendeten Kammern durchläuft zeitlich nacheinander die Prozesse 11..14. Das Blockschaltbild gemäß Fig. 1 kann daher auch räumlich so verstanden werden, daß sich jeweils einige der Kammern gleichzeitig und räumlich nebeneinander in jeweils einem der Verfahrensstadien gemäß der Prozesse 11..14 befinden. Während also mit einigen der Kammern und dem darin befindlichen Adsorptionsmittel der Adsorptionsprozeß 11 durchgeführt wird, wird gleichzeitig das Adsorptionsmittel anderer Kammern mit den drei Prozessen 12..14 wiederaufbereitet, wobei sich einige Kammern erst im Elutionsvorgang 12, einige bereits im Desorptionsprozeß 13 und weitere bereits im Reinigungsprozeß 14 befinden. Vorzugsweise werden sechzehn Kammern mit Adsorptionsmittel für das Entcoffeinierungsverfahren verwendet, wobei sich gleichzeitig zehn Kammern im Adsorptionsprozeß 11, eine Kammer im Elutionsvorgang 12, vier Kammern im Desorptionsprozeß 13 und eine Kammer im Reinigungsprozeß 14 befinden.

Ist bei der letztgenannten Kammer der Reinigungsprozeß 14, also das letzte Stadium des Wiederaufbereitungsprozesses des Adsorptionsmittels, abgeschlossen worden, so wird diese Kammer dem Adsorptionsprozeß 11 wieder zugeführt. Gleichzeitig wird die am längsten im Adsorptionsprozeß 11 befindliche Kammer dem Elutionsprozeß 12 zugeführt, die vorhergehende Kammer aus dem Elutionsprozeß 12 dem Desorptionsprozeß zugeführt und die am längsten im Desorptionsprozeß 13 befindliche Kammer dem Reinigungsprozeß 14 zugeführt. Die Kammern kommen also zyklisch von einem Prozeß in den nächsten, wobei die Anzahl der Kammern in dem jeweiligen Prozeß mit Vorteil immer konstant bleibt.

Beispielsweise befinden sich dadurch im Adsorptionsprozeß 11 die Kammern seit einer unterschiedlich langen Zeitdauer. Vorzugsweise wird der Adsorptionsprozeß von frischem Rohkaffee-Extrakt in derjenigen Kammer begonnen, die sich am längsten im Adsorptionsprozeß befindet, also das Adsorptionsmittel aufweist, welches bereits am meisten mit Coffein beladen ist und somit am wenigsten noch aufnahmebereit bzw. adsorptionsfähig für Coffein ist. Der Rohkaffee-Extrakt wird im Laufe des Adsorptionsprozesses durch alle (zehn) Kammern geleitet. Zuletzt durch die Kammer, die frisch aus dem Reinigungsprozeß 14 in den Adsorptionsprozeß 11 überführt worden ist, also das Adsorptionsmittel mit der höchsten Adsorptionsfähigkeit für Coffein beinhaltet. Auch der letzte Rest Coffein wird somit effektiv dem Rohkaffee-Extrakt entzogen.

Dabei ist vorteilhaft, daß die Kammern für die Überführung von einem Prozeß in den nächsten nicht ortsverändert werden müssen. Vielmehr bleiben die Kammern unverändert an ihrem Ort, und es werden jeweils lediglich die für den Prozeß benötigten Mittel in die Kammern eingeleitet. Jede Kammer wird also für den jeweiligen Prozeß an die dafür vorgesehenen Substanzleitungen angeschlossen. Zur vorrichtungsmäßigen Verwirklichung ist lediglich eine Parallelschaltung der Kammern notwendig sowie eine geeignete Ventilsteuerung.

Dem Adsorptionsprozeß 11 wird vorzugsweise 20 l/h Rohkaffee-Extrakt zugeführt. Dabei wird vorzugsweise wässriger Rohkaffee-Extrakt mit 5 g/l Coffein verwendet. Daraus ergibt sich unter Berücksichtigung der Prozeßfolge für jede einzelne Kammer eine Beladung des Adsorptionsmittels jeder Kammer mit 100 g Coffein während des Adsorptionsprozesses 11.

Die einzelnen Prozesse 11..14 müssen zeitlich aufeinander abgestimmt werden. Beispielsweise kann der Elutionsprozeß 12 in drei Stufen, je 10 min, durchgeführt werden, so daß der gesamte Elutionsprozeß 12 0,5 h andauert. Insgesamt werden dabei beispielsweise 6 l Elutionsmittel verwendet. Nach der Elution kann die gespülte Kammer 0,5 h in Wartestellung verbleiben, bevor sie in den Desorptionsprozeß 13 überführt wird. Der Desorptionsprozeß kann für jede Kammer 1 h dauern. Danach wir die Kammer in den Reinigungsprozeß 14 überführt. Die eigentliche Reinigung im Reinigungsprozeß 14 kann beispielsweise 0,5 h in Anspruch nehmen. Hieran könnte sich ebenfalls 0,5 h Wartezeit anschließen. Dies bedeutet, daß gleichzeitig zu 1 h Adsorptionsprozeß 11 andere Kammern den Elutionsprozeß 12 mit Wartezeit, den Desorptionsprozeß 13 oder den Reinigungsprozeß 14 mit Wartezeit absolvieren. Danach findet die zyklische Übergabe jeweils einer Kammer von einem Prozeß in den jeweils nächsten Prozeß statt. Nur mit kurzen Unterbrechungen für die Abschaltung bzw. Zuschaltung einer Kammer kann der Adsorptionsprozeß 11 somit quasi kontinuierlich durchgeführt werden.

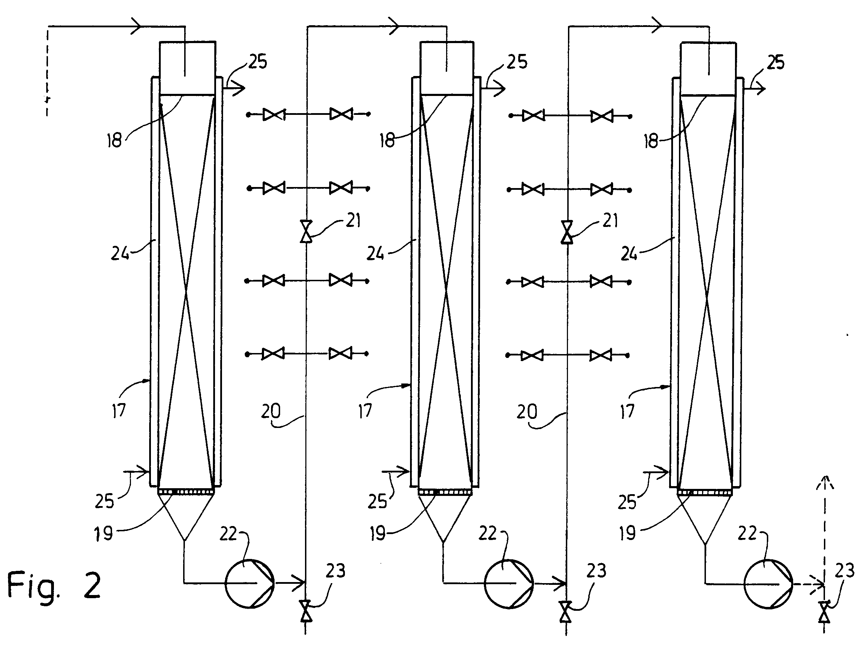

Die Fig. 2 zeigt schematisch eine Seitenansicht von Kammern mit Adsorptionsmittel, wie sie für die Prozesse 11..14 gemäß der Fig. 1 verwendet werden können. In der Fig. 2 sind drei von vorzugsweise insgesamt sechzehn Kammern gezeigt.

Als Kammern werden lotrecht orientierte Kolonnen 17 verwendet. Diese Kolonnen sind mit Zeolith (beispielsweise 2 kg) als Adsorptionsmittel befüllt, und zwar etwa bis in die Höhe eines Spiegels 18. Das Zeolith in der Kolonne 17 liegt auf einem durchlässigen Siebboden 19 auf und bildet auf diesem Siebboden 19 ein Festbett von Adsorptionsmittel. Über Verbindungsleitungen 20 sind die aufeinanderfolgenden Kolonnen 17 miteinander verbunden, und zwar derart, daß Mittel oben in eine Kolonne 17 eingeleitet, unten aus der Kolonne 17 abgeleitet und wiederum oben in die nächste Kolonne 17 eingeleitet werden können. Jede Verbindungsleitung 20 weist ein betätigbares Absperrventil 21 auf, um die jeweils vorhergehende Kolonne 17 gegebenenfalls von der nachfolgenden Kolonnengruppe abzukoppeln. Die Mittel in den Verbindungsleitungen 20 werden mit Pumpen 22 bewegt. Probenentnahmen sind über Probenventile 23 möglich.

Jede Kolonne 17 weist einen Doppelmantel 24 auf. Mittels dieses Doppelmantels 24 ist die Wandung der Kolonne 17 mit einem Heizmedium beheizbar. Ein solches Heizmedium kann, wie durch die Pfeile 25 angedeutet, durch den Doppelmantel 24 hindurchgeleitet werden. Diese Durchleitung des Heizmediums durch den Doppelmantel 24 kann im Gegenstrom zur Substanzleitung durch die Kolonnen 17 erfolgen. Die Kolonnen 17 werden vorzugsweise auf Temperaturen von 60 °C bis 80 °C, vorzugsweise etwa 75 °C, erwärmt. Die Temperatur kann auf eine Optimierung des jeweils durchzuführenden Prozesses abgestimmt werden, sie kann aber auch beispielsweise im Hinblick auf die Verhinderung des Verderbs des Rohkaffee-Extraktes relevant sein.

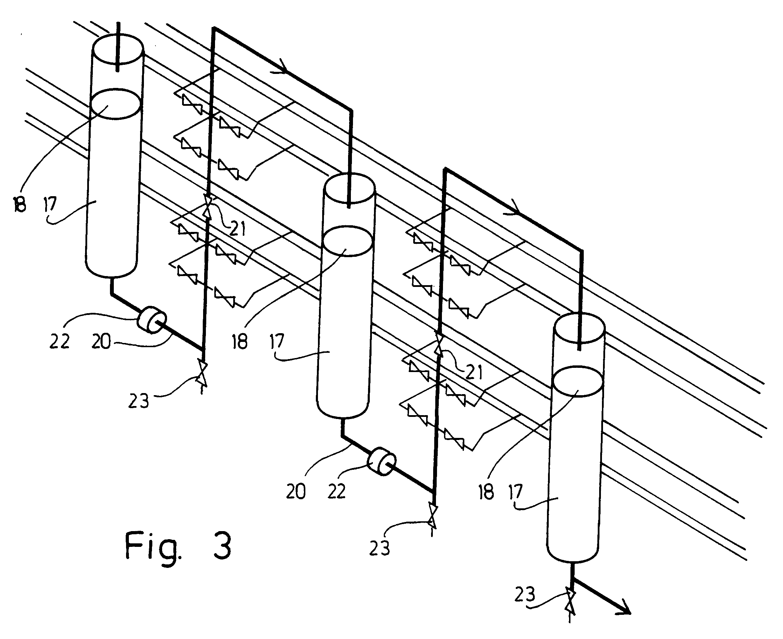

Fig. 3 zeigt die drei Kolonnen 17 gemäß Fig. 2 in einer schematischen Perspektivansicht.

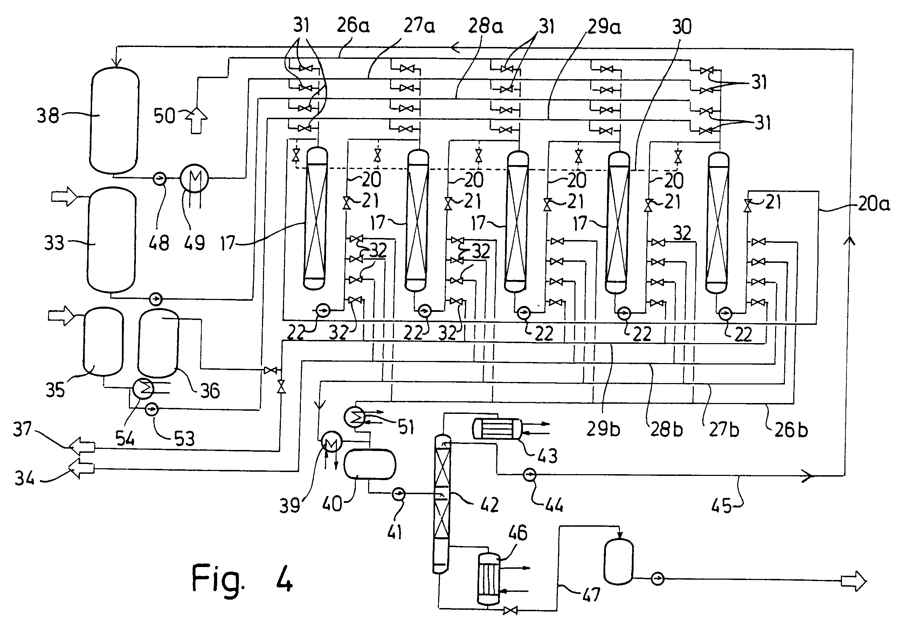

Fig. 4 zeigt die Schaltung gemäß eines ersten Ausführungsbeispiels einer erfindungsgemäßen Entcoffeinierungsvorrichtung.

Gleiche Bauelemente sind in der Fig. 4 und den nachfolgenden Figuren mit den gleichen Bezugszahlen bezeichnet wie in Fig. 2.

Die Fig. 4 zeigt mehrere Kolonnen 17, der Einfachheit halber nur fünf Kolonnen von vorzugsweise sechzehn Kolonnen. Über eine Verbindungsleitung 20a und die übrigen Verbindungsleitungen 20 sind die Kolonnen 17 ringförmig miteinander verbunden.

Jede der Kolonnen 17 weist Anschlüsse für Mittelzuleitungen 26a..29a und für Ableitungen 26b..29b auf. Bezüglich dieser Mittelleitungen 26..29 sind die Kolonnen 17 zueinander parallel geschaltet. Für die Überbrückung einer defekten Kolonne 17 oder die Umkehrung der Durchlaufrichtung der Mittel durch die Kolonnen 17 ist eine Bypassleitung 30 vorgesehen.

Mit Hilfe der Absperrventile 21 können einander benachbarte Kolonnen 17 miteinander verbunden oder voneinander getrennt werden, so daß Gruppen aus ein oder mehr Kolonnen 17, die voneinander getrennt sind, gebildet werden können. Mit Hilfe von jeweils vier Vorlaufventilen 31 und vier Rücklaufventilen 32 kann jede Kolonne 17 jeweils mit einer der Substanzleitungen 26..29 verbunden werden, wobei die Kolonnen 17 einer Kolonnengruppe jeweils mit derselben Substanzleitung 26..29 verbunden sind.

Zu entcoffeinierender Rohkaffee-Extrakt wird in einem Rohkaffee-Behälter 33 bereitgestellt. Über die Leitung 28 kann der Rohkaffee-Extrakt durch ausgewählte Kolonnen 17 hindurchgeleitet werden und in Richtung des Pfeiles 34 nach der Entcoffeinierung abgeleitet werden. Für die Adsorption des Coffeins aus dem Rohkaffee-Extrakt wird eine Gruppe von vorzugsweise zehn Kolonnen 17 als Adsorptionsgruppe über die Verbindungsleitungen 20 bzw. Absperrventile 21 miteinander verbunden und andererseits von den übrigen Kolonnen 17 getrennt. Nur die erste Kolonne 17 dieser Adsorptionsgruppe wird mit der Zuleitung 28a für den Extrakt verbunden und nur die letzte Kolonne 17 wird mit der Ableitung 28b für den Extrakt verbunden. Dadurch gelangt der Extrakt zur Entcoffeinierung in die erste Kolonne 17 dieser Gruppe und über die Verbindungsleitungen 20 jeweils (von Kolonne zu Kolonne) durch die nachfolgenden Kolonnen 17 bis zur letzten Kolonne 17 und von dort in die Ableitung 28b.

Nach einem solchen Extraktdurchlauf durch die Adsorptionskolonnengruppe wird diejenige Kolonne 17, die am längsten dieser Adsorptionsgruppe angehört, aus dieser Adsorptionsgruppe herausgeschaltet, indem das vorhergehende und das nachfolgende Absperrventil 21 geschlossen wird. Auch die zur Leitung 28 gehörenden Vorlauf- bzw. Rücklaufventile 31, 32 werden geschlossen. Durch Öffnen der Ventile 31, 32 zur Leitung 29 wird diese Kolonne 17 dann an den Elutionskreislauf angeschlossen um einen Spülprozeß durchzuführen. Die Elutionsmittelzuleitung 29a ist an einen Behälter 35 mit Elutionsmittel angeschlossen. Aus diesem Elutionsmittelbehälter 35 wird Elutionsmittel heraus- und durch die zu spülende Kolonne 17 geleitet. Nach der Elution kann das durch die Kolonne 17 gelangte, mit Extrakt-Inhaltsstoffen angereichterte Elutionsmittel in einen zweiten Elutionsmittelbehälter 36 eingebracht werden. Dieses Elutionsmittel aus dem Elutionsmittelbehälter 36, das aus dem Adsorptionsmittel herausgelöste Extrakt-Inhaltsstoffe enthält, kann für eine zweite Elution benutzt werden und schließlich in Richtung des Pfeiles 37 abgeleitet werden. Das Elutionsmittel, das aus dem Adsorptionsmittel herausgelöste Extrakt-Inhaltsstoffe enthält, kann als Quellflüssigkeit zum Quellen von Rohkaffee-Bohnen weiterverwendet werden, um aus Rohkaffee-Bohnen einen zu entcoffeinierenden Rohkaffee-Extrakt herzustellen, der in den Rohkaffee-Extrakt-Behälter 33 gelangt.

Die Kolonne 17, die die Elution durchlaufen hat, wird durch entsprechende Betätigung der Ventile 31, 32 von der Leitung 29 abgekoppelt und an die Desorptions-Mittelleitung 27 angeschlossen. Vorzugsweise befinden sich immer vier Kolonnen gleichzeitig im Desorptionsprozeß. Dabei könnten die Kolonnen 17 der Desorptionsgruppe gleichzeitig oder auch nacheinander über die Verbindungsleitungen 20 von Desorptionsmittel durchflossen werden, welches in einem Desorptionsmittel-Behälter 38 bevorratet ist, der an die Desorptionsmittel-Leitung 27 angeschlossen ist. Nachdem das Desorptionsmittel die Kolonnen 17 der Desorptionsgruppe durchlaufen hat, gelangt es über die Desorptionsmittel-Ableitung 27b über einen Kühler 39 in einen Zwischenbehälter 40. Von dort gelangt das Desorptionsmittel mittels einer Pumpe 41 in eine Destillationsanlage 42. In dem abgeleiteten Desorptionsmittel befindet sich das desorbierte Coffein, welches aus dem Adsorptionsmittel der Kolonnen 17 der Desorptionsgruppe desorbiert worden ist. In der Destillationsanlage 42 wird das Desorptionsmittel von dem Coffein getrennt, indem es abdestilliert und mit einem Kühler 43 heruntergekühlt wird. Mittels einer Pumpe 44 wird das rückgewonnene, gekühlte Desorptionsmittel durch eine Rückführungsleitung 45 in den Desorptionsmittel-Behälter 38 rückgeführt. Am unteren Teil der Destillationsanlage 42 bleibt wässrige Coffeinlösung zurück, die mittels eines Umlaufverdampfers 46 konzentriert werden kann und über eine Ableitung 47 abgeleitet wird.

Es befinden sich vorzugsweise vier Kolonnen 17 gleichzeitig im Desorptionsprozeß, wobei aufeinanderfolgend immer eine Kolonne 17 aus der vorangehenden Elution zur Desorptionsgruppe geschaltet und gleichzeitig eine bereits desorbierte Kolonne 17 aus der Desorptionsgruppe herausgenommen wird, so daß die Zahl vier der Kolonnen 17 konstant bleibt. Jeweils frisches Desorptionsmittel wird über eine Pumpe 48 und einen Wärmetauscher 49 aus dem Desorptionsmittel-Behälter 38 in die Kolonne 17 der Desorptionsgruppe gepumpt, welche bereits am weitestgehendsten desorbiert ist. Beispielsweise wird 40 min lang 4 l Desorptionsmittel in diese Kolonne 17 gepumpt. Gleichzeitig wird verbrauchtes Desorptionsmittel aus der Kolonne 17 der Desorptionsgruppe gepumpt, die am kürzesten der Desorptionsgruppe angehört und in die das Desorptionsmittel von der (jetzt) ältesten Desorptionskolonne aus über die Verbindungsleitungen 20 gelangt ist. Das verbrauchte Desorptionsmittel wird in die Destillationsanlage 42 abgepumpt. Die mit frischem Desorptionsmittel versorgte Kolonne 17, welche mittlerweile völlig desorbiert ist, wird im Zeitraum von 20 min leergepumpt, wobei das Desorptionsmittel aus ihr in die nachfolgende Kolonne 17 der Desorptionsgruppe abgegeben wird. Danach wird die desorbierte Kolonne 17 aus der Desorptionsgruppe herausgeschaltet. Die aus dem Elutionsprozeß gelangende Kolonne 17 wird in die Desorptionsgruppe zugeschaltet und erhält das Desorptionsmittel, welches durch das relativ frische Desorptionsmittel aus der soeben aus der Desorptionsgruppe herausgeschalteten Kolonne schließlich aus der der frisch aus der Elution zugeschalteten Kolonne 17 vorangehenden Kolonne 17 der Desorptionsgruppe herausgedrängt wird. Jede Kolonne befindet sich somit über vier Stunden in der Desorptionsgruppe.

Die aus der Desorptionsgruppe herausgeschaltete Kolonne wird als einzelne Kolonne an die Reinigungsmittel-Leitung 26 angeschlossen, nachdem sie durch die Absperrventile 21 von den übrigen Kolonnen abgesperrt worden ist.

Als Reinigungsmittel wird Wasserdampf in Richtung des Pfeiles 50 in die Reinigungsmittel-Zuleitung 26a eingeleitet und durch die zu reinigende Kolonne 17 hindurchgeleitet. Über die Reinigungsmittel-Ableitung 26b wird der Dampf aus der gereinigten Kolonne, der den letzten Rest von Desorptionsmittel aus dieser gereinigten Kolonne 17 verdrängt hat, abgeleitet und gelangt mit diesem Desorptionsmittelrest über einen Kühler 51 in den Zwischenbehälter 40, in den auch gebrauchtes Desorptionsmittel gelangt. Es wird also eine Desorptionsmittel/Wasserdampf-Mischung, welche gelöstes Coffein enthält, in der Destillationsanlage 42 aufbereitet und in frisches Desorptionsmittel und wässrige Coffeinlösung getrennt.

Nach dem Reinigungsprozeß ist das Adsorptionsmittel der gereinigten Kolonne 17 wieder adsorptionsfähig, so daß es wieder in die Adsorptionsgruppe aus zehn Kolonnen zugeschaltet werden kann. An ihrer Stelle wird die verbrauchteste Adsorptionskolonne der Elution zugeführt.

Es befinden sich also immer von sechzehn Kolonnen zehn Kolonnen im Adsorptionsprozeß, eine Kolonne im Elutionsprozeß, vier Kolonnen im Desorptionsprozeß und eine Kolonne im Reinigungsprozeß, wobei taktweise jeweils immer nur eine Kolonne einer Gruppe zyklisch von einer Gruppe in die nächste geschaltet wird. Dies ist durch einfache Betätigung der Ventile 21 und 31, 32 möglich.

Ein Gesamtzyklus, bei dem eine Kolonne sämtliche möglichen Verfahrensstadien durchläuft, und zwar als jüngste Adsorptionskolonne bis hin zur ältesten Adsorptionskolonne, als im Spülprozeß befindliche Kolonne, als jüngste Desorptionskolonne bis hin zur ältesten Desorptionskolonne und schließlich als im Reinigungsprozeß befindliche Kolonne, dauert 16 h. Jeder Schalttakt, bei dem jeweils eine Kolonne zur nachfolgenden Kolonnengruppe zyklisch weitergeschaltet wird, dauert jeweils 1 h.

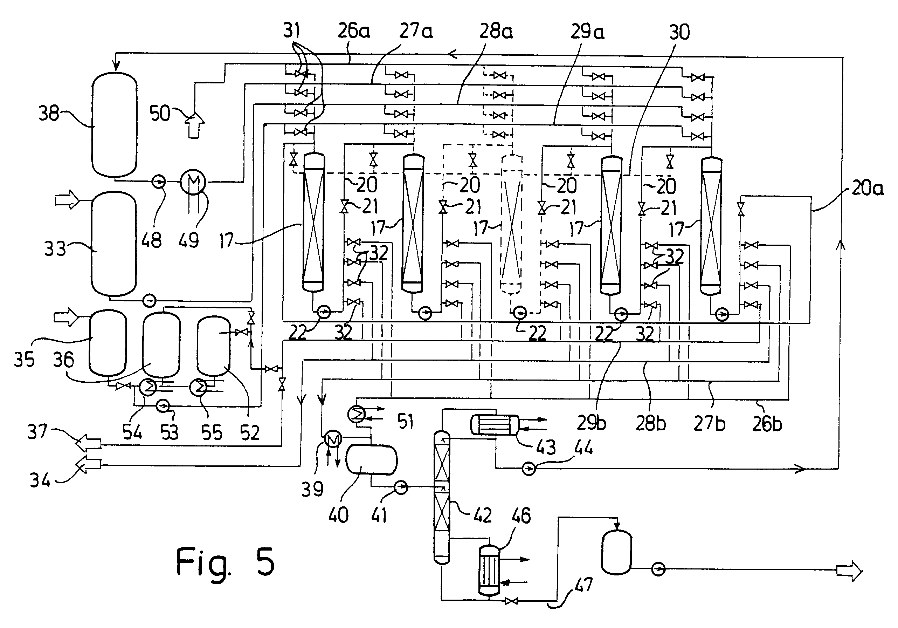

Die Fig. 5 zeigt im Prinzip eine Schaltung wie Fig. 4. Die Schaltung gemäß Fig. 5 unterscheidet sich von der Schaltung gemäß Fig. 4 lediglich durch einen zusätzlichen dritten Elutionsmittel-Behälter 52.

Von dem ersten Elutionsmittel-Behälter 35 gelangt frisches Elutionsmittel durch die im Elutionsprozeß befindliche Kolonne 17 in den zweiten Elutionsmittel-Behälter 36. Von dort wird Elutionsmittel für eine zweite Elution der Kolonne 17 entnommen und durch die Kolonne 17 in den dritten Elutionsmittel-Behälter 52 geleitet. Das Elutionsmittel aus dem dritten Elutionsmittel-Behälter 52 wird für eine dritte Elution verwendet und danach in Richtung des Pfeiles 37 abgeleitet. Für den Elutionsmittelkreislauf ist eine Pumpe 53 vorgesehen sowie Wärmetauscher 54, 55.

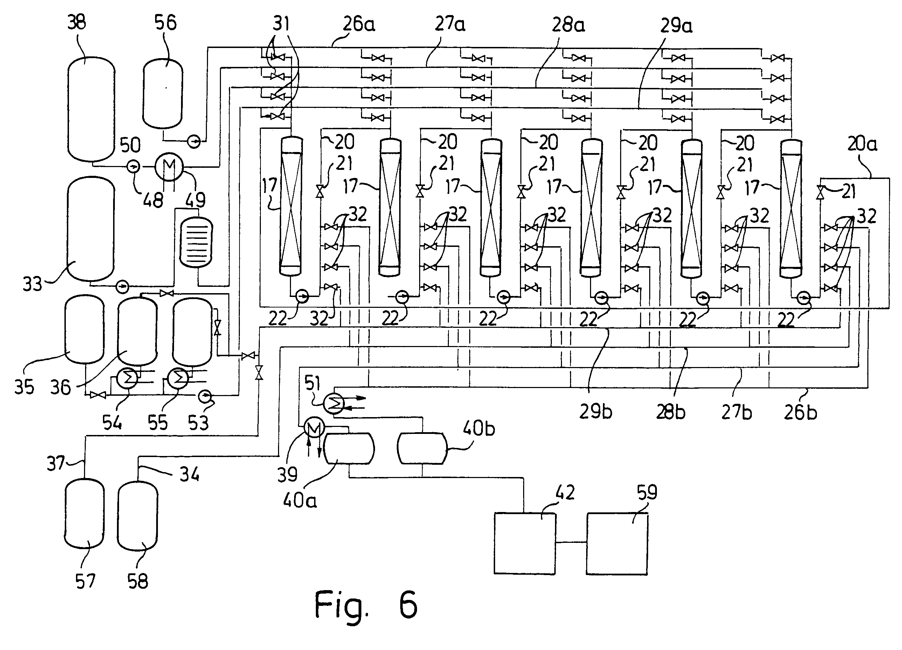

Die Fig. 6 zeigt wiederum eine ähnliche Schaltung wie die Fig. 4 und 5, insbesondere wie Fig. 5. In der Fig. 6 sind zusätzlich ein Dampfbehälter 56 sowie Behälter 57 und 58 für benutztes Elutionsmittel und entcoffeinierten Extrakt angedeutet. Anstelle des Zwischenbehälters 40 sind zwei Zwischenbehälter 40a und 40b vorgesehen. Der Destillationsanlage 42 ist eine Coffeinaufbereitungsanlage 59 nachgeschaltet.

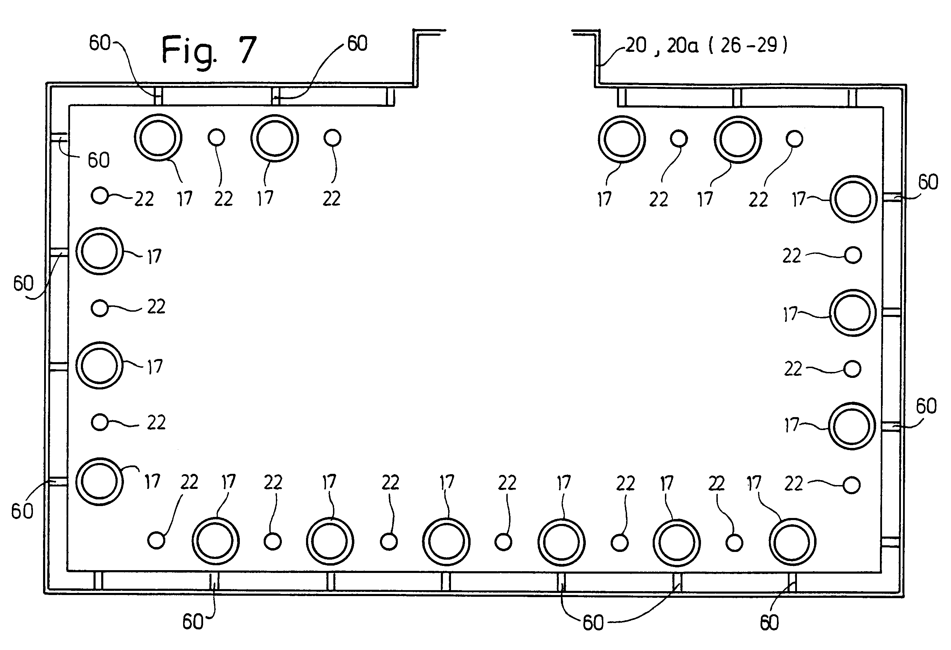

Fig. 7 zeigt eine schematische Draufsicht auf sechzehn Kolonnen 17. Diese Kolonnen 17 sind mittels Kolonnenhalterungen 60 im wesentlichen gleichmäßig auf dem Umfang eines Rechteckes verteilt angeordnet. Außerdem ist angedeutet, daß die Kolonnen 17 über Leitungen 20, 20a bzw. 26..29 zu einem Ringleitungssystem zusammengeschlossen sind.

### Bezugszeichenliste

- 10: Extraktion (Blockschaltbild Fig. 1)
- 11: Adsorption (Blockschaltbild Fig. 1)
- 12: Elution (Blockschaltbild Fig. 1)
- 13: Desorption (Blockschaltbild Fig. 1)
- 14: Reinigen (Blockschaltbild Fig. 1)
- 15: Destillation (Blockschaltbild Fig. 1)
- 16: Coffeinaufbereitung (Blockschaltbild Fig. 1)
- 17: Kolonne
- 18: Spiegel
- 19: Siebboden
- 20: Verbindungsleitung
- 20a: Verbindungsleitung
- 21: Absperrventil
- 22: Pumpe
- 23: Probenventil
- 24: Doppelmantel
- 25: Pfeil (Heizmedium)
- 26a: (Mittel-) Zuleitung
- 26b: (Mittel-) Ableitung
- 27a: (Mittel-) Zuleitung
- 27b: (Mittel-) Ableitung
- 28a: (Mittel-) Zuleitung
- 28b: (Mittel-) Ableitung
- 29a: (Mittel-) Zuleitung
- 29b: (Mittel-) Ableitung
- 30: Bypass-Leitung
- 31: Vorlaufventil
- 32: Rücklaufventil
- 34: Pfeil für Rohkaffee-Extrakt
- 35: erster Behälter für Elutionsmittel
- 36: zweiter Behälter für Elutionsmittel
- 37: Pfeil (Elutionsmittel)
- 38: Desorptionsmittel-Behälter
- 39: Kühler
- 40: Zwischenbehälter
- 41: Pumpe
- 42: Destillationsanlage
- 43: Kühler
- 44: Pumpe
- 45: Rückführungsleitung
- 46: Umlaufverdampfer
- 47: Coffeinableitung
- 48: Pumpe
- 49: Wärmetauscher
- 50: Pfeil (Dampf)
- 51: Kühler
- 52: dritter Behälter für Elutionsmittel
- 53: Pumpe (Spülkreislauf)
- 54: Wärmetauscher (Elutionskreislauf)
- 55: Wärmetauscher (Elutionskreislauf)
- 56: Behälter
- 57: Behälter
- 58: Behälter
- 59: Coffeinaufbereitungsanlage
- 60: Kolonnenhalterung

## Patentansprüche

1. Verfahren zum Entcoffeinieren von flüssigen, insbesondere wässrigen Rohkaffee-Extrakten, wobei das Coffein aus dem Extrakt von einem Adsorptionsmittel adsorbiert wird, **dadurch gekennzeichnet**, daß als Adsorptionsmittel ein Molekularsieb verwendet wird und daß das Verfahren des Regenerierens des Adsorptionsmittels, insbesondere die Desorption von adsorbiertem Coffein in mindestens einem weiteren Verfahrensschritt zur Wiederverwendbarkeit des Adsorptionsmittels umfaßt.

2. Verfahren nach Anspruch 1, dadurch gekennzeichnet, daß als Molekularsieb Zeolith verwendet wird.

3. Verfahren nach Anspruch 2, dadurch gekennzeichnet, daß der Zeolith ein Y-Zeolith ist.

4. Verfahren nach einem der Ansprüche 1 bis 3, dadurch gekennzeichnet, daß der mit Coffein baladene Molekularsieb mit einem flüssigen Desorptionsmittel behandelt wird, um die Desorption des Coffeins zu erreichen.

5. Verfahren nach Anspruch 4, dadurch gekennzeichnet, daß das Desorptionsmittel ein Alkohol-Wasser-Gemisch ist.

6. Verfahren nach Anspruch 5, dadurch gekennzeichnet, daß das Desorptionsmittel zu 80 % aus Alkohol und zu 20 % aus Wasser besteht.

7. Verfahren nach einem der Ansprüche 1 bis 6, dadurch gekennzeichnet, daß das Verfahren ganz oder teilweise bei einer Temperatur von etwa 50° C bis 100° C, vorzugsweise bei etwa 75° C durchgeführt wird.

8. Verfahren nach einem der Ansprüche 1 bis 7, dadurch gekennzeichnet, daß der Molekularsieb nach der Desorption mit einem Reinigungsmittel, vorzugsweise Wasser oder Wasserdampf behandelt wird, um Reste des Desorptionsmittels zu entfernen.

9. Verfahren nach einem der Ansprüche 1 bis 8, dadurch gekennzeichnet, daß der mit Coffein beladene Molekularsieb vor der Desorption zur Elution von anhaltenden Nicht-Coffein-Inhaltsstoffen mit einem Elutionsmittel, vorzugsweise Wasser, behandelt wird.

10. Verfahren nach einem der vorhergehenden Ansprüche, dadurch gekennzeichnet, daß die Verfahrensschritte, wenigstens umfassend die Adsorption des Coffeins durch einen Molekularsieb und das Regenerieren des Molekularsiebs in vorrichtungsmäßig separaten, vorzugsweise gleich ausgebildeten Stufen durchgeführt werden.

11. Verfahren nach Anspruch 10, dadurch gekennzeichnet, daß einzelne Stufen oder auch Gruppen von jeweils ein oder mehreren Stufen mit Molekularsieb zeitlich nebeneinander für unterschiedliche Verfahrensstadien verwendet werden, aber jede einzelne Stufe zeitlich aufeinanderfolgend unterschiedliche Verfahrensstadien durchläuft.

12. Verfahren nach Anspruch 11, dadurch gekennzeichnet, daß bei einer Gruppe aus mehrern Stufen im gleichen Verfahrensstadium die dem Verfahrensstadium entsprechende Substanz (Rohkaffee-Extrakt, Elutionsmittel, Desorptionsmittel, Reinigungsmittel) nacheinander die Stufen dieser Gruppen durchläuft.

13. Verfahren nach Anspruch 11 oder 12, dadurch gekennzeichnet, daß sechzehn Stufen verwendet werden, von denen gleichzeitig jeweils zehn Stufen als Gruppe im Verfahrensstadium der Adsorption und die übrigen sechs Stufen im Wiederaufbereitungsprozeß gehalten werden.

14. Verfahren nach Anspruch 13, dadurch gekennzeichnet, daß vier Stufen im Verfahrensstadium der Desorption des Coffeins vom Molekularsieb dieser Stufen gehalten werden.

15. Verfahren nach Anspruch 13 und 14, dadurch gekennzeichnet, maß jeweils eine Stufe im Verfahrenssstadium zum Eluieren des Molekularsiebes vor der Desorption und eine Stufe im Verfahrensstadium zum Reinigen des Molekularsiebes nach der Desorption gehalten werden.

16. Verfahren nach einem der Ansprüche 10 bis 15, dadurch gekennzeichnet, daß als Stufe jeweils eine Kolonne verwendet wird, die Molekularsieb enthält.

17. Verfahren nach einem der vorhergehenden Ansprüche, dadurch gekennzeichnet, daß zur Coffeinadsorption etwa 20 l/h von flüssigem Rohkaffee-Extrakt durch den Molekularsieb geleitet werden.

18. Verfahren nach enem der vorhergehenden Ansprüche, dadurch gekennzeichnet, daß Rohkaffee-Extrakt mit einer Konzentration von etwa 5 g/l verwendet werden.

19. Vorrichtung zum Entcoffeinieren von flüssigen, insbesondere wässrigen Rohkaffee-Extrakten, vorzugsweise zur Durchführung eines Verfahrens gemäß einem der Ansprüche 1 bis 18, gekennzeichnet durch mindestens eine Kammer (Vorrichtungsstufe), in der ein Festbett aus Adsorptionsmittel angeordnet ist, durch das flüssige oder gasförmige Substanzen hindurchleitbar sind, und die Zuleitungs- und Ableitungsanschlüsse aufweist zum Einleiten und Ableiten von Rohkaffee-Extrakt und von mindestens einem weiteren Mittel zum Regenerieren des Adsorptionsmittels.

20. Vorrichtung nach Anspruch 19, dadurch gekennzeichnet, daß die Kammer Bestandteil einer Kolonne (17) ist.

21. Vorrichtung nach Anspruch 19 oder 20, dadurch gekennzeichnet, daß die Kammer vier Zuleituns- und vier Ableitungsanschlüsse aufweist, und zwar jeweils einen Zu- und Ableitungsanschluß für eine Rohkaffee-Extrakt-Leitung (28), eine Leitung für Elutionsmittel für eine Elution (29), eine Leitung für ein Desorptionsmittel zur Desorption (27) und für eine Leitung (26) für ein Reinigungsmittel für einen Reinigungsprozeß.

22. Vorrichtung nach Anspruch 21, dadurch gekennzeichnet, daß die Desorptionsmittel-Leitung (27) als Ringleitung ausgebildet ist, die an einem Desorptionsmittel-Behälter (38) beginnt, zur Kammer führt und von der Kammer zu einer Destillationsanlage (42) zur Rückgewinnung des Desorptionsmittels verläuft und von dort das gereinigte Desorptionsmittel zurück in den Desorptionsmittel-Behälter (38) bringt.

23. Vorrichtung nach Anspruch 21, dadurch gekennzeichnet, daß drei Elutionsmittel-Behälter (35, 36, 52) vorgesehen sind, die über die Elutionsmittelleitung (29) miteinander verbunden sind, derart, daß ein dreimaliges Eluieren der Kammer (Kolonne 17) realisierbar ist, wobei der erste Elutionsmittel-Behälter zur Aufnahme von frischem Elutionsmittel vor einem Durchlauf, der zweite Behälter für Elutionsmittel nach dem ersten Durchlauf, der dritte Elutionsmittelbehälter für Elutionsmittel nach dem zweiten Durchlauf dient und das Elutionsmittel (Eluat) nach dem dritten Durchlauf in die Ableitung gelangt.

24. Vorrichtung nach einem der Ansprüche 19 bis 23, dadurch gekennzeichnet, daß sie aus mehreren Kammern, insbesonderer sechzehn Kammern besteht.

25. Vorrichtung nach Anspruch 24, daurch gekennzeichnet, daß die Kammern bezüglich der Substanzleitungen (26...29) parallel geschaltet sind.

26. Vorrichtung nach Anspruch 24 oder 25, dadurch gekennzeichnet, daß jeweils eine Kammer mit der jeweils nachfolgenden Kammer über eine Verbingsleitung (20, 20a) vebunden ist.

27. Vorrichtung nach Anspruch 26, dadurch gekennzeichnet, daß die Verbindungsleitung (20, 20a) den Ablauf der Kammer mit dem Zulauf der nachfolgenden Kammer verbindet.

28. Vorrichtung nach einem oder mehreren der Ansprüche 24 bis 27, dadurch gekennzeichnet, daß die Kammern durch eine Verbindungsleitung (20a) zwischen der letzten Kammer und der ersten Kammer zu einer Ringschaltung zusammengeschlossen sind.
